# EUROPEAN PATENT APPLICATION

(11) **EP 4 307 185 A1**
(43) Date of publication of application: **17.01.2024**
(21) Application number: 21938819.6
(22) Date of filing: 30.08.2021
(51) Int. Cl.: G06N 20/00

(54) **METHOD AND APPARATUS FOR ACQUIRING KNOWLEDGE**

(30) Priority: 29.04.2021 CN 202110473240; 28.06.2021 CN 202110720333
(71) Applicant: Huawei Cloud Computing Technologies Co., Ltd., Guizhou 550025 (CN)
(72) Inventor: ZHENG, Zimu, Shenzhen, Guangdong 518129 (CN); LUO, Puhan, Shenzhen, Guangdong 518129 (CN)
(74) Representative: Maiwald GmbH
(86) International application number: PCT/CN2021/115192
(87) International publication number: WO 2022/227355

(57) **Abstract**

A knowledge obtaining method and apparatus are provided. The method includes: obtaining one or more pieces of first knowledge from a knowledge base based on a parameter, where the parameter includes any one or any combination of the following: knowledge in a machine learning task, an attribute of the machine learning task, and knowledge between a plurality of machine learning tasks; and providing the one or more pieces of first knowledge to a user. In the foregoing technical solution, corresponding knowledge can be automatically obtained from the knowledge base based on the parameter, so that accurate knowledge search in the knowledge base is implemented.

## Description

### TECHNICAL FIELD

This application relates to the field of computers, and more specifically, to a knowledge obtaining method and apparatus.

### BACKGROUND

A model is a most important part of knowledge in machine learning. However, model training is time-consuming. With constant expanding of application scenarios, a model may be stored in a model knowledge base. Machine learning developers may search the base for desired pre-trained models and directly use them after simple modification, which greatly reduces manpower and material consumption caused by repeated training.

In related technical solutions, only simple model search is performed based on names in existing model knowledge bases, and application scopes of models are indefinite such that a model to be used in a specific scenario is indefinite. As a result, accurate search cannot be performed in the model knowledge base.

Therefore, how to implement accurate search in a model knowledge base becomes a problem to be urgently resolved.

### SUMMARY

This application provides a knowledge obtaining method and apparatus, so that corresponding knowledge can be automatically obtained from a knowledge base based on a parameter, to implement accurate knowledge search in the knowledge base.

According to a first aspect, a knowledge obtaining method is provided, including: obtaining one or more pieces of first knowledge from a knowledge base based on a parameter, where the parameter includes any one or any combination of the following: knowledge in a machine learning task, an attribute of the machine learning task, and knowledge between a plurality of machine learning tasks; and providing the one or more pieces of first knowledge for a user.

In the foregoing technical solution, corresponding knowledge can be automatically obtained from the knowledge base based on the parameter, so that accurate knowledge search in the knowledge base is implemented.

With reference to the first aspect, in some implementations of the first aspect, the method further includes: obtaining the parameter inputted by the user, or obtaining the parameter from another system.

With reference to the first aspect, in some implementations of the first aspect, the knowledge in the machine learning task includes a sample set and a model of the machine learning task. The model is obtained through training based on the sample set; or the attribute of the machine learning task includes a constraint and an application scope of the machine learning task; or the knowledge between the plurality of machine learning tasks includes an association relationship between the plurality of machine learning tasks.

With reference to the first aspect, in some implementations of the first aspect, the method further includes: obtaining second knowledge related to the first knowledge from the knowledge base; and providing the second knowledge for the user.

With reference to the first aspect, in some implementations of the first aspect, a knowledge similarity comparison method is determined based on the first knowledge; a list of similar knowledge is obtained from a task knowledge base based on the knowledge similarity comparison method; and the second knowledge is determined from the list of similar knowledge based on a similarity threshold.

With reference to the first aspect, in some implementations of the first aspect, the method further includes: providing the user with configuration information of the first knowledge.

With reference to the first aspect, in some implementations of the first aspect, the method further includes: obtaining target knowledge selected by the user, where the target knowledge is the first knowledge and/or the second knowledge.

With reference to the first aspect, in some implementations of the first aspect, the target knowledge is used in any one of the following scenarios:
object recognition in intelligent driving;
facial recognition in the intelligent driving;
a developer platform;
an artificial intelligence marketing platform;
an internet of things marketing platform; and
a marketing platform for solutions.

With reference to the first aspect, in some implementations of the first aspect, the method further includes: updating the task knowledge base based on the first knowledge and the second knowledge.

With reference to the first aspect, in some implementations of the first aspect, a knowledge difference and similarity comparison method is determined based on the first knowledge and the second knowledge; a knowledge difference and similarity comparison result is obtained based on the knowledge difference and similarity comparison method, where the knowledge difference and similarity comparison result is a comparison result of a difference and similarity between the first knowledge and the second knowledge; based on the knowledge difference and similarity comparison result and an update rule, any one or any combination of the following knowledge in the task knowledge base is updated: the knowledge in the machine learning task, the attribute of the machine learning task, and the knowledge between the plurality of machine learning tasks.

With reference to the first aspect, in some implementations of the first aspect, the method further includes: An edge device synchronizes the knowledge in the knowledge base to a cloud device, or a cloud device synchronizes the knowledge in the knowledge base to an edge device.

According to a second aspect, an apparatus for obtaining knowledge is provided, including an obtaining module and a display module. The obtaining module is configured to obtain one or more pieces of first knowledge from a knowledge base based on a parameter, where the parameter includes any one or any combination of the following: knowledge in a machine learning task, an attribute of the machine learning task, and knowledge between a plurality of machine learning tasks. The display module is configured to provide the one or more pieces of first knowledge for a user.

With reference to the second aspect, in some implementations of the second aspect, the obtaining module is further configured to: obtain the parameter inputted by the user, or obtain the parameter from another system.

With reference to the second aspect, in some implementations of the second aspect, the knowledge in the machine learning task includes a sample set and a model of the machine learning task. The model is obtained through training based on the sample set; or the attribute of the machine learning task includes a constraint and an application scope of the machine learning task; or the knowledge between the plurality of machine learning tasks includes an association relationship between the plurality of machine learning tasks.

With reference to the second aspect, in some implementations of the second aspect, the obtaining module is further configured to obtain second knowledge related to the first knowledge from the knowledge base; and the display module is further configured to provide the second knowledge for the user.

With reference to the second aspect, in some implementations of the second aspect, the display module is further configured to provide the user with configuration information of the first knowledge.

With reference to the second aspect, in some implementations of the second aspect, the obtaining module is further configured to obtain target knowledge selected by the user, where the target knowledge is the first knowledge and/or the second knowledge.

With reference to the second aspect, in some implementations of the second aspect, the target knowledge is used in any one of the following scenarios:
object recognition in intelligent driving;
facial recognition in the intelligent driving;
a developer platform;
an artificial intelligence marketing platform;
an internet of things marketing platform; and
a marketing platform for solutions.

With reference to the second aspect, in some implementations of the second aspect, the apparatus further includes: a synchronization module, configured to synchronize, for an edge device, the knowledge in the knowledge base to a cloud device; or synchronize, for a cloud device, the knowledge in the knowledge base to an edge device.

According to a third aspect, a knowledge obtaining device is provided, including an input/output interface, a processor, and a memory, where the processor is configured to control the input/output interface to receive and send information. The memory is configured to store a computer program. The processor is configured to invoke the computer program from the memory and run the computer program, so that the method in the first aspect or any one of the possible implementations of the first aspect is performed.

Optionally, the processor may be a general-purpose processor, and may be implemented using hardware or software. When implemented using the hardware, the processor may be a logic circuit, an integrated circuit, or the like. When implemented using software, the processor may be a general-purpose processor, and is implemented by reading software code stored in the memory. The memory may be integrated into the processor, or may be located outside the processor, and exist independently.

According to a fourth aspect, a chip is provided. The chip obtains instructions and executes the instructions to implement the method in the first aspect or any one of the implementations of the first aspect.

Optionally, in an implementation, the chip includes a processor and a data interface. The processor reads, through the data interface, instructions stored in a memory, to implement the method in the first aspect or any one of the implementations of the first aspect.

Optionally, in an implementation, the chip may further include a memory, where the memory stores instructions. The processor is configured to execute the instructions stored in the memory. When the instructions are executed, the processor is configured to implement the method in the first aspect or any one of the implementations of the first aspect.

According to a fifth aspect, a computer program product is provided, where the computer program product includes computer program code. When the computer program code is run on a computer, the computer is enabled to implement the method according to the first aspect or any one of the implementations of the first aspect.

According to a sixth aspect, a computer-readable storage medium is provided, including instructions, where the instructions are used to implement the method according to the first aspect or any one of the implementations of the first aspect.

Optionally, in an implementation, the foregoing storage medium may be specifically a non-volatile storage medium.

### BRIEF DESCRIPTION OF DRAWINGS

FIG. 1 is a schematic flowchart of a knowledge obtaining method according to an embodiment of this application;
FIG. 2 is a schematic block diagram of knowledge base initialization according to an embodiment of this application;
FIG. 3 is another schematic block diagram of knowledge base initialization according to an embodiment of this application;
FIG. 4 is a schematic block diagram of a knowledge base running phase according to an embodiment of this application;
FIG. 5A and FIG. 5B are schematic block diagrams of another knowledge base running phase according to an embodiment of this application;
FIG. 6 is a schematic diagram of a parameter configuration interface for knowledge base initialization according to an embodiment of this application;
FIG. 7 is a schematic diagram of a parameter configuration interface for querying a model in a knowledge base according to an embodiment of this application;
FIG. 8 is a schematic diagram of a parameter configuration interface for querying a task in a knowledge base according to an embodiment of this application;
FIG. 9 is a schematic diagram of a parameter configuration interface for querying an application scope of a model in a knowledge base according to an embodiment of this application;
FIG. 10 is a schematic block diagram of a knowledge obtaining apparatus 1000 according to an embodiment of this application; and
FIG. 11 is a schematic block diagram of a knowledge obtaining device 1100 according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in embodiments of this application should not be explained as being more preferable or more advantageous than another embodiment or design scheme. Exactly, use of the terms such as "example" is intended to present a concept in a specific implementation.

In embodiments of this application, "relevant (corresponding, relevant)" and "corresponding (corresponding)" may sometimes be mixed. It should be noted that meanings to be expressed by the two are consistent when a difference between them is not emphasized.

Network architectures and service scenarios described in embodiments of this application aim to describe the technical solutions in embodiments of this application more clearly, but are not intended to limit the technical solutions provided in embodiments of this application. A person of ordinary skill in the art may learn that as the network architectures evolve and a new service scenario emerges, the technical solutions provided in embodiments of this application are further applicable to a similar technical problem.

Reference to "one embodiment" or "some embodiments" described in this specification means that a specific characteristic, structure or feature described in combination with this embodiment is included in one or more embodiments of this application. Therefore, statements "in one embodiment", "in some embodiments", "in some other embodiments", "in other embodiments", and the like in the differences in this specification do not necessarily refer to the same embodiment, but mean "one or more but not all embodiments", unless otherwise specially emphasized in other ways. The terms "include", "contain", "have" and their variations mean "including but not limited to", unless otherwise specially emphasized in other ways.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. A character "/" usually indicates an "or" relationship between the associated objects. At least one of the following items (pieces) or a similar expression thereof refers to any combination of these items, including any combination of singular items (pieces) or plural items (pieces). For example, at least one of a, b, or c may represent a, b, c, "a and b", "a and c", "b and c", or "a, b, and c", where a, b, and c may be singular or plural.

For ease of understanding, terms and concepts related to embodiments of this application are first described.

A model is a most important part of knowledge in machine learning. A typical model such as a deep neural network has yielded good results in many machine learning-related applications, such as image classification and speech recognition. However, model training is time-consuming. With constant expanding of application scenarios, open-source sharing of training data and models gradually becomes a trend in the industry. For example, Google-developed TensorFlow Hub is a model knowledge base for reusable machine learning. Machine learning developers may search the base for desired pre-trained models and directly use them after simple modification, which greatly reduces manpower and material consumption caused by repeated training. However, an existing model knowledge base has the following problems:

### 1. Inaccurate search in the model knowledge base

In existing model knowledge bases (also referred to as knowledge search engines), only simple model search is performed based on names, and application scopes of models are indefinite such that a model to be used in a specific scenario is indefinite. Due to diversified edge scenarios, customized AI services are required for different scenarios. In addition, edge data is highly non-independent and identically distributed, such that adapted models cannot be accurately obtained through searching based on different scenarios in existing knowledge search engines. Therefore, current edge models heavily depend on manual customization, leading to great manpower and material consumption, and low reusability of existing models in the knowledge base in actual scenarios. For example, in a scenario of prediction and controlling for coal blending performance by an edge, there are the following cases in which different models are required: (1) varied production targets and conditions in different factories result in large differences in coal blending sheet data; (2) varied working conditions, for example, a 1000°C environment and a 1200°C environment, yield different coke strength after reaction (coke strength after reaction, CSR); and (3) different production lines, even if of a same factory, have different conveyor belt losses and crusher losses, and may be equipped with different coal blending operators, in which a unified model is not applicable.

### 2. Catastrophic forgetting of knowledge

Conventional machine learning methods, including transfer learning and incremental learning, retain only one model where modification is made, and do not save different models for different scenarios. Consequently, previous models are often forgotten in different environment, and serious errors occur in scenarios that could be handled in the past, such that transfer learning and incremental learning are performed repeatedly. This deteriorates user experience as low accuracy due to forgetting, and causes a waste of time and manpower resulting from repeated data collection and model learning. For example, to predict CSR in coal blending, the conventional incremental learning method is used to train a model for a working condition A, and the model performs well in the working condition A. When the condition changes, data of a working condition B needs to be collected as model accuracy of the trained model decreases, to transfer or incrementally change the model for the working condition A to a model for the working condition B. However, when a working condition changes back to the working condition A, a new model almost forgets knowledge for the working condition A as parameters of an original model are basically overwritten. In this case, data needs to be re-collected and the model for the working condition B needs to be transferred or incrementally changed to the model for the working condition A. Therefore, such repeated learning causes a waste of time and computing power.

In view of this, an embodiment of this application provides a knowledge obtaining method, so that corresponding knowledge can be automatically obtained from a knowledge base based on a parameter, to implement accurate knowledge search in the knowledge base.

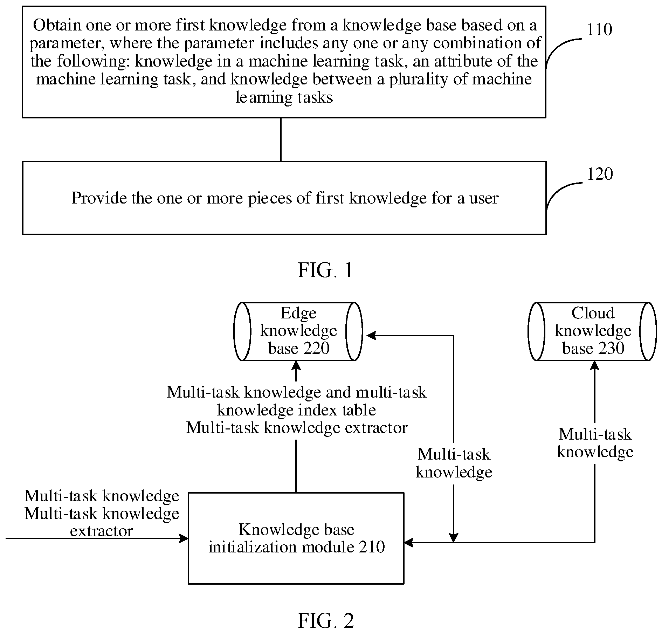

With reference to FIG. 1, the following describes in detail a knowledge obtaining method according to an embodiment of this application. As shown in FIG. 1, the method includes steps 110 and 120. The following separately describes in detail the steps 110 and 120.

Step 110: Obtain one or more pieces of first knowledge from a knowledge base based on a parameter, where the parameter includes any one or any combination of the following: knowledge in a machine learning task, an attribute of the machine learning task, and knowledge between a plurality of machine learning tasks.

Optionally, the parameter may be obtained before step 110. Specifically, the parameter inputted by a user may be obtained, or the parameter may be obtained from another system (for example, another intelligent platform). This is not specifically limited in this application.

As an example, the knowledge in the machine learning task includes a sample set and a model of the machine learning task, and the model is obtained through training based on the sample set. The attribute of the machine learning task includes a constraint and an application scope of the machine learning task. The knowledge between the plurality of machine learning tasks includes an association relationship between the plurality of machine learning tasks. The following describes in detail the foregoing knowledge with reference to specific examples, and details are not described herein again.

Step 120: Provide the one or more pieces of first knowledge for the user.

Optionally, second knowledge related to the first knowledge may be further obtained from the knowledge base, and is provided to the user.

Optionally, configuration information related to the first knowledge, for example, introduction and benefits of the first knowledge, may be further provided to the user.

Optionally, configuration information related to the second knowledge may be further provided to the user.

Optionally, target knowledge selected by the user may be further obtained, where the target knowledge is the first knowledge and/or the second knowledge.

As an example, the target knowledge is used in any one of the following scenarios:
object recognition in intelligent driving;
facial recognition in the intelligent driving;
a developer platform;
an AI marketing platform;
an internet of things marketing platform; and
a marketing platform for solutions.

Optionally, mutual synchronization between a knowledge base of an edge device and a knowledge base of a cloud device may be further implemented. For example, the edge device synchronizes the knowledge in its knowledge base to the cloud device; or the cloud device synchronizes the knowledge in its knowledge base to the edge device.

FIG. 2 is a schematic block diagram of knowledge base initialization according to an embodiment of this application. As shown in FIG. 2, a knowledge base initialization process may include a knowledge base initialization module 210, an edge knowledge base 220, and a cloud knowledge base 230. The following separately describes functions of each of the modules in detail.

The edge knowledge base 220 is a knowledge base located on an edge device, configured to store multi-task knowledge, a multi-task knowledge index table, and a multi-task knowledge extractor. The edge device may be, for example, a user-side server.

The cloud knowledge base 230 is a knowledge base located on a cloud-side device, configured to store the multi-task knowledge, the multi-task knowledge index table, and the multi-task knowledge extractor. The cloud-side device may be, for example, a cloud-side server.

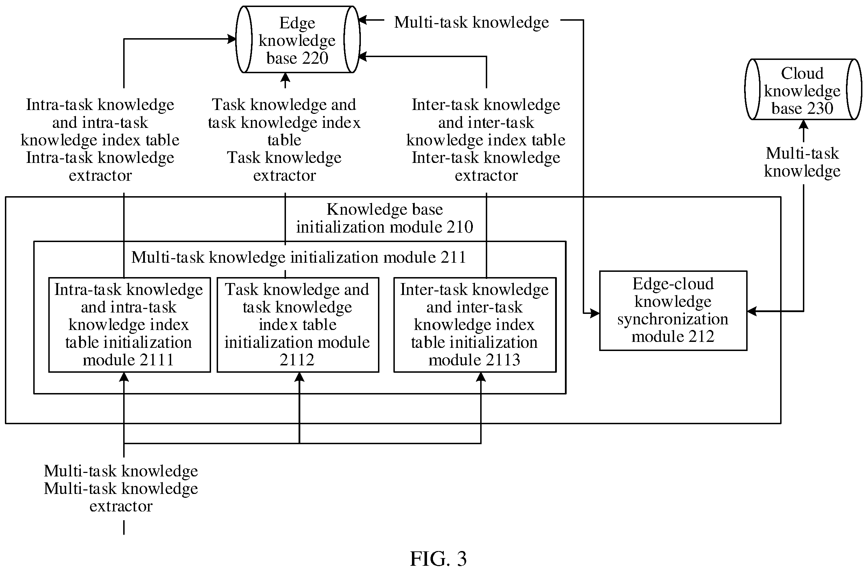

The knowledge base initialization module 210 is configured to construct the foregoing knowledge base, which may also be understood as initializing the foregoing knowledge base. Optionally, the knowledge base initialization module 210 is further configured to implement storage and synchronization of multi-task knowledge between the edge knowledge base 220 and the cloud knowledge base 230. Specifically, input of the knowledge base initialization module 210 is multi-task knowledge and a multi-task knowledge extractor (which may be a multi-task knowledge and a multi-task knowledge extractor inputted by a system, or multi-task knowledge and a multi-task knowledge extractor on a cloud), and output is the multi-task knowledge, the multi-task knowledge index table, and the multi-task knowledge extractor. In other words, the knowledge base initialization module 210 can store the multi-task knowledge index table and the multi-task knowledge extractor in the edge knowledge base 220 or the cloud knowledge base 230 based on the multi-task knowledge and the multi-task knowledge extractor, and implement storage and synchronization of the multi-task knowledge between the edge knowledge base 220 and the cloud knowledge base 230. As an example shown in FIG. 3, the knowledge base initialization module 210 may include two sub-modules: a multi-task knowledge initialization module 211 and an edge-cloud knowledge synchronization module 212. The following will describe functions of the two sub-modules in detail, and are not described herein.

It should be understood that a task, namely a machine learning task, can be understood as a model learning process for a specific sample. The sample herein may be a label or a feature. Multi-task knowledge may include three levels of knowledge: intra-task knowledge, task knowledge, and inter-task knowledge. Optionally, the multi-task knowledge may further include another level of knowledge: a task group (group). The following describes all the levels of knowledge in detail.

As an example, the first level of knowledge, which is the intra-task knowledge, is knowledge that may be stored in conventional lifelong learning, including a sample (sample) and a model (model). The sample, also referred to as a task sample, is a task-based sample set for a defined task. The sample includes data records used for model training or testing, and each record includes different data items. The sample may be a labeled sample or an unlabeled sample. For example, a coal blending sample is shown in Table 1. The model, also referred to as a task model, is a model obtained by training each task separately. Information about the model may include but is not limited to a model training method, a model hyperparameter, a model parameter, and the like. The model training method may include but is not limited to a machine learning algorithm, for example, a neural network or a support vector machine. The model hyperparameter refers to a configuration item of the machine learning algorithm used for training a model, for example, a learning rate in the neural network. The model parameter refers to a configuration of a model mapping function, obtained by training using the machine learning algorithm, for example, a weight in the neural network and a support vector in the support vector machine. For example, a coal blending prediction model obtained through training based on a coal blending sample is shown in Table 2.

**Table 1 Coal blending sample**

| Sample name | ad | vdaf | std | G value | CSR |
|---|---|---|---|---|---|
| Coal blending sample 1 | 8.553833 | 27.38117 | 0.494833 | 68.4 | 65.0 |

**Table 2 Coal blending prediction model**

| Model name | Training method | Model hyperparameter | Model parameter |
|---|---|---|---|
| Coal blending model 1 | Linear regression | Learning rate = 0.05... | A1 = 10, A2 = 1.5... |

In another example, the second level of knowledge, which is the task knowledge, is knowledge that is not stored in conventional lifelong learning, including a task constraint, a task attribute, and the like. The task constraint refers to a configuration item of a task definition algorithm for task division. For example, a lower limit of a task sample quantity is a minimum quantity of samples included in the task. The task attribute is used to define a data item or a feature column of an application scope of a model. Table 3 shows a coal blending task.

**Table 3 Coal blending task**

| Task name | Sample lower limit | Task sample | Task model |
|---|---|---|---|
| Coal blending task 1 | 10 | Coal blending sample set 1 | Coal blending model 1 |
| Task attribute | | | |
| Decision tree rule: ad<9 && vdaf>27 \|\| ad>9 && vdaf>29 && std<0.5 | | | |

In another example, the third level of knowledge, which is the inter-task knowledge, is knowledge that is not stored in conventional lifelong learning, including an association relationship between a plurality of tasks, and used for determining and optimization of unknown tasks. Specifically, the inter-task knowledge may include a task list and an association between different tasks. The task list is a list of tasks stored in a knowledge base, and is an input of a task relation discovery. There are two inheritance forms for the association between different tasks: a semantic subordinate relation (belong relation) and a transfer relation (transfer relation) in transfer learning. The semantic subordinate relation is used to express a degree of mutual subordination between different tasks, and may be outputted using a task definition method. Table 4 shows a subordinate matrix for a coal blending task. The transfer relation in transfer learning is used to express a degree of mutual transfer between different tasks, and may be outputted using a task transfer relation discovery. Table 5 shows a transfer matrix for a coal blending task. As an example, the task transfer relation discovery method is to measure, based on the task sample and other features, transferability between tasks using a similarity method or the like. For example, the inter-task knowledge may be extracted through a metadata-based task transfer relation discovery currently. A basic principle is as follows: separately performing weighting on a metadata item and a data item in a distance function, constructing prior clustering using the metadata as a constraint, and constructing posterior clustering based on data on the basis of prior clustering.

**Table 4 Subordinate matrix for a coal blending task**

| Task index | 01 | 02 | 03 |
|---|---|---|---|
| 01 | - | 0.9/Main task (Shandong Coal Factory) | 0.6/No subordinate |
| 02 | 0.9/Sub task (Qingdao Coal Factory) | - | 0.4/No subordinate |
| 03 | 0.6/No subordinate | 0.4/No subordinate | - |

**Table 5 Transfer matrix for a coal blending task**

| Task index | 01 | 02 | 03 |
|---|---|---|---|
| 01 | - | 0.9/Transfer (Qingdao Coal Factory) | 0.6/No transfer |
| 02 | 0.9/Transfer (Jinan Coal Factory) | - | 0.4/No transfer |
| 03 | 0.6/No transfer | 0.4/No transfer | - |

In another example, the fourth level of knowledge, which is the task group (group), is knowledge that is not stored in conventional lifelong learning. Task group means grouping tasks with similar relation, to acceleration for an unknown task optimization module. A task group may include a task group constraint, a task group attribute, a task list, a task group sample, a task group model, and the like. The task group constraint refers to a configuration item of a task group division algorithm for task group division. For example, a lower limit of a task group sample quantity is a minimum quantity of samples included in a task group. The task group attribute is used to define a data item or a feature column of an application scope of a task group. The task list is a list of tasks stored in the knowledge base, and is an input of the task group division algorithm. The task group sample refers to all samples in the task group. The task group model is a model obtained by training all the samples in the task group, or a model constructed based on knowledge of a plurality of tasks in each task group.

The following describes in detail functions of the multi-task knowledge initialization module 211 and the edge-cloud knowledge synchronization module 212.

The multi-task knowledge initialization module 211 initializes the knowledge base based on the inputted multi-task knowledge and the multi-task knowledge extractor, stores the multi-task knowledge index table and the multi-task knowledge extractor in the edge knowledge base 220, feeds back an initialization state after initialization, and synchronizes the initialization state to the cloud knowledge base 230. Specifically, the multi-task knowledge initialization module 211 may include: an intra-task knowledge and intra-task knowledge index table initialization module 2111, a task knowledge and task knowledge index table initialization module 2112, and an inter-task knowledge and inter-task knowledge index table initialization module 2113. The multi-task knowledge initialization module 211 may choose to invoke the foregoing one or more sub-modules depending on different levels of the multi-task knowledge. For example, in the case that inputted multi-task knowledge includes only a sample and a task attribute, but no inter-task knowledge such as a task transfer relation, only the first two sub-modules (the intra-task knowledge and intra-task knowledge index table initialization module 2111, and the task knowledge and task knowledge index table initialization module 2112) need to be invoked for initialization.

For the intra-task knowledge and intra-task knowledge index table initialization module 2111, the input is the multi-task knowledge and the multi-task knowledge extractor, and the output is intra-task knowledge, an intra-task knowledge index table, and an intra-task knowledge extractor. Specifically, the intra-task knowledge and intra-task knowledge index table initialization module 2111, based on the inputted multi-task knowledge and the multi-task knowledge extractor, generates the intra-task knowledge, the intra-task knowledge index table, and the intra-task knowledge extractor; and initializes the intra-task knowledge, the intra-task knowledge index table, and the intra-task knowledge extractor into the edge knowledge base 220. For example, if the multi-task knowledge is a sample set and a task attribute of the sample set, the intra-task knowledge and intra-task knowledge index table initialization module 2111 takes the task attribute as an index of the sample set, and updates the knowledge into the intra-task knowledge index table.

For the task knowledge and task knowledge index table initialization module 2112, input thereof is the multi-task knowledge and the multi-task knowledge extractor; and output thereof is task knowledge, a task knowledge index table, and a task knowledge extractor. Specifically, the task knowledge and task knowledge index table initialization module 2112 generates, based on the inputted multi-task knowledge and the multi-task knowledge extractor, the task knowledge, the task knowledge index table, and the task knowledge extractor; and initializes the output into the edge knowledge base 220. For example, if the multi-task knowledge is a task, including a task sample, a task model, and a task attribute of the knowledge, the task knowledge and task knowledge index table initialization module 2112 takes the task attribute as an index of the task and updates the knowledge into the task knowledge index table.

For the inter-task knowledge and inter-task knowledge index table initialization module 2113, the input is the multi-task knowledge and the multi-task knowledge extractor, and the output is inter-task knowledge, an inter-task knowledge index table, and an inter-task knowledge extractor. Specifically, the inter-task knowledge and inter-task knowledge index table initialization module 2113 generates, based on the inputted multi-task knowledge and the multi-task knowledge extractor the inter-task knowledge, the inter-task knowledge index table, and the inter-task knowledge extractor; and initializes the output into the edge knowledge base 220. For example, if the multi-task knowledge is a transfer relation between a task and another task, and a task group thereof, the inter-task knowledge and inter-task knowledge index table initialization module 2113 takes the task attribute as an index of the task and updates the knowledge into the inter-task knowledge index table.

The edge-cloud knowledge synchronization module 212 is configured to bidirectionally transmit the multi-task knowledge between the edge knowledge base 220 and the cloud knowledge base 230, to ensure knowledge synchronization. This avoids a problem that a large quantity of models for training are hardly supported due to limited computing resources in the edge knowledge base 220. Input of the edge-cloud knowledge synchronization module 212 is the multi-task knowledge, and output is the multi-task knowledge and an initialization status feedback. Specifically, the edge-cloud knowledge synchronization module 212 initializes the edge knowledge base 220 based on the multi-task knowledge of the cloud knowledge base 230, and feeds back the initialization state after initialization. If the multi-task knowledge initialization module 211 is used during initialization, knowledge outputted by the multi-task knowledge initialization module 211 to the edge knowledge base 220 also needs to be synchronized to the cloud knowledge base 230, for example, addressing a knowledge conflict. For example, a conflict is addressed based on timestamp, confidence of the knowledge/a quantity of supporting evidences, or manually addressed by a knowledge base administrator.

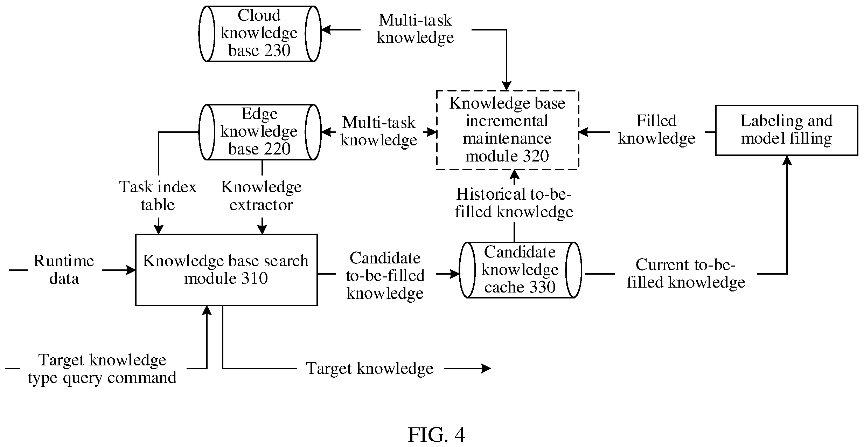

The following describes in detail a running phase of the edge knowledge base 220 with reference to FIG. 4. As shown in FIG. 4, the running phase may include the edge knowledge base 220, the cloud knowledge base 230, a knowledge base search module 310, and a candidate knowledge cache 330. Optionally, the running phase may further include a knowledge base incremental maintenance module 320. The following separately describes functions of the modules in detail.

### 1. Knowledge base search module 310

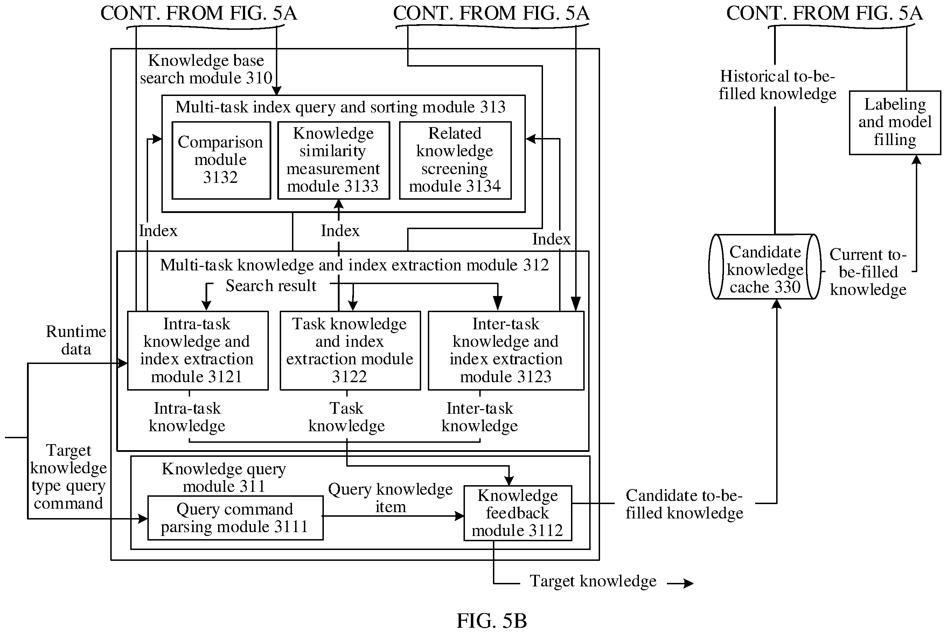

Functions of this module include: searching a knowledge base (for example, the edge knowledge base 220) based on runtime data and a target knowledge type query command, extracting knowledge and indexes at different levels using extractors at different levels in the knowledge base, and providing feedbacks. Specifically, the target knowledge type query command is parsed using a query command, to obtain a list of query knowledge items; and based on the list of query knowledge items, the knowledge base search module 310 performs searching and sorting using a task index table, and then outputs target knowledge and candidate to-be-filled knowledge. For example, as shown in FIG. 5B, the knowledge base search module 310 includes the following sub-modules: a knowledge query module 311, a multi-task knowledge and index extraction module 312, and a multi-task index query and sorting module 313. The following will describe functions of the sub-modules included in the knowledge base search module 310 in detail with reference to FIG. 5B, and details are not described herein.

### 2. The knowledge base incremental maintenance module 320

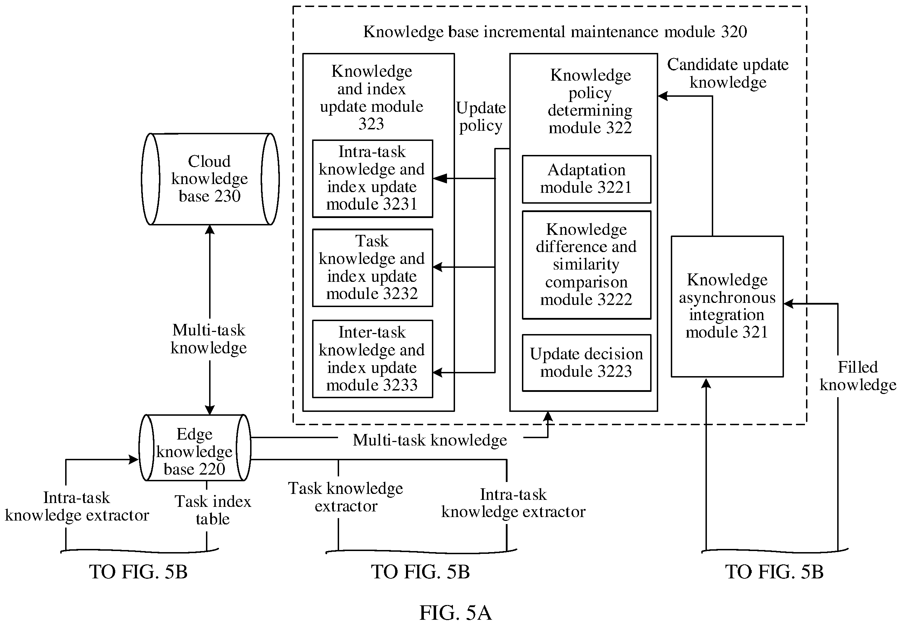

Functions of this module include: processing different levels of knowledge of a new task based on whether the new task is known, and performing incremental maintenance on the knowledge base. Specifically, the input is historical to-be-filled knowledge, filled knowledge, and multi-task knowledge; and the output is intra-task knowledge, task knowledge, and inter-task knowledge. In an example, the knowledge base incremental maintenance module 320 first integrates the historical to-be-filled knowledge in the candidate knowledge cache 330 and the filled knowledge obtained through labeling and model filling into complete candidate update knowledge, obtains an update policy with reference to existing multi-task knowledge, and then updates the knowledge into the knowledge base. For example, as shown in FIG. 5A, the knowledge base incremental maintenance module 320 may include the following sub-modules: a knowledge asynchronous integration module 321, a knowledge policy determining module 322, and a knowledge and index update module 323.

With reference to the specific example in FIG. 5A and FIG. 5B, the following describes in detail functions of the sub-modules included in the knowledge base search module 310 and the knowledge base incremental maintenance module 320.

1. The knowledge base search module 310 includes the following sub-modules: the knowledge query module 311, the multi-task knowledge and index extraction module 312, and the multi-task index query and sorting module 313.

The knowledge query module 311 queries related knowledge based on a target knowledge type query command of a user and feeds back a query result. Specifically, the knowledge query module 311 parses the target knowledge type query command of the user into a list of query knowledge items for knowledge query, and outputs a query result as target knowledge to the user, and also places the target knowledge as candidate to-be-filled knowledge into the candidate knowledge cache 330. Specifically, as an example shown in FIG. 5B, the knowledge query module 311 includes the following sub-modules: a query command parsing module 3111 and a knowledge feedback module 3112.

The query command parsing module 3111 parses the target knowledge type query command of the user into a query knowledge item for knowledge query. Specifically, the input is the target knowledge type query command, and the output is the list of query knowledge items and a recipient. In an example, the query command may be, for example, in a dictionary-like format, such as a query format in Table 6. A query knowledge type may include different levels of knowledge such as intra-task knowledge, task knowledge, inter-task knowledge, and the like. In another example, the user may raise a question for the runtime data, for example, "a user A wants to know task knowledge related to a runtime dataset 03". The user sends a target knowledge type query command to the system based on the content of the question. The query command parsing module 312 parses the command into a list of query knowledge items, which may be in a list format. For example, when the query knowledge type in the command is a task, the list of query knowledge items is {task attribute, task model, task sample}. The query command parsing module 312 parses the query command into several specific query knowledge items such as "sample" and "task", and outputs the query knowledge items "samples" and "tasks" to the knowledge feedback module 313.

**Table 6 Query format**

| Query command ID | Query party | Recipient address | Query knowledge type | Runtime data (set) ID |
|---|---|---|---|---|
| 01 | User A | 192.162.x.x | Task knowledge | 03 |

The knowledge feedback module 3112 determines, based on the list of query knowledge items, which knowledge and index extraction modules need to be invoked, outputs extracted knowledge as the target knowledge to the user, and places the extracted knowledge as the candidate to-be-filled knowledge into the candidate knowledge cache 330. Specifically, the input is the list of query knowledge items and the recipient, and the output is the target knowledge and the candidate to-be-filled knowledge. In an example, the knowledge feedback module 3112 invokes one or more corresponding knowledge and index extraction modules based on the list of query knowledge items. For example, if the user only needs to query the knowledge related to "samples" and "tasks", and does not care about the inter-task knowledge, the knowledge feedback module 3112 only needs to invoke an intra-task knowledge and index extraction module and a task knowledge and index extraction module, and then returns a search and extraction result to the user as the target knowledge. In addition, the target knowledge is also placed in the candidate knowledge cache 330 as some known candidate to-be-filled knowledge. If no related knowledge is found in the knowledge base, the knowledge is also placed in the candidate knowledge cache 330 as unknown candidate to-be-filled knowledge.

The multi-task knowledge and index extraction module 312 searches the knowledge base based on the runtime data and the query knowledge item, and uses the knowledge extractor to extract an intra-task knowledge and index, a task knowledge and index, and an inter-task knowledge and index. Specifically, the input is the runtime data, the knowledge extractor, and the query knowledge item. The output is the intra-task knowledge and index, the task knowledge and index and the inter-task knowledge and index. For example, as shown in FIG. 5B, the multi-task knowledge and index extraction module 312 may include the following sub-modules: an intra-task knowledge and index extraction module 3121, a task knowledge and index extraction module 3122, and an inter-task knowledge and index extraction module 3123. The multi-task knowledge and index extraction module 314 extracts different levels of knowledge based on the query knowledge item. For example, only the intra-task knowledge is queried but the task knowledge and the inter-task knowledge are not queried, or all the three types of knowledge are queried.

The intra-task knowledge and index extraction module 3121 extracts, based on the runtime data and the intra-task knowledge extractor, the intra-task knowledge including a sample, a model, indexes of the sample and the model, and the like. Specifically, the input is the runtime data and the intra-task knowledge extractor. The output is the intra-task knowledge and index. In an example, the intra-task knowledge and index extraction module 3121 extracts the intra-task knowledge based on the runtime data and the intra-task knowledge extractor. For example, if the user wants to know "what samples are related to the runtime data", the intra-task knowledge and index extraction module 3121 first extracts a task index, and then invokes, based on the task index, the multi-task index query and sorting module 313 to search for related samples.

The task knowledge and index extraction module 3122 extracts the task knowledge such as the task attribute and the index of the task attribute based on the runtime data, the task knowledge extractor, and the intra-task knowledge. Specifically, the input is the runtime data, the task knowledge extractor, and the intra-task knowledge. The output is the task knowledge and the knowledge index. In an example, the task knowledge and index extraction module 3122 extracts the intra-task knowledge based on the runtime data and the intra-task knowledge extractor. For example, if the user wants to know "whether the runtime data belongs to a known task", the task knowledge and index extraction module 3122 first extracts the task index, and then invokes, based on the task index, the multi-task index query and sorting module 313 to search for a related task and a task attribute, a task model, a task sample and the like of the related task.

The inter-task knowledge and index extraction module 3123 extracts the inter-task knowledge, such as the task relation, the task group, and indexes of the task relation and the task group based on the runtime data, the inter-task knowledge extractor, and the task knowledge. Specifically, the input is the runtime data, the inter-task knowledge extractor, and the task knowledge. The output is the inter-task knowledge. In an example, the inter-task knowledge and index extraction module 3123 extracts the inter-task knowledge based on the runtime data and the intra-task knowledge extractor. For example, if the user wants to know "what tasks are related to the task corresponding to the runtime data", the inter-task knowledge and index extraction module 3123 first extracts the task index, and then invokes, based on the task knowledge and task index, the multi-task index query and sorting module 313 to search for whether there are the related task, and the task relation, the task group, and the like of the related task.

The multi-task index query and sorting module 313, also referred to as a related knowledge query module, searches for each level of knowledge in the knowledge base based on the index extracted by the knowledge and index extracting module and the task index table in the knowledge base, and outputs a search result based on similarity ranking. Specifically, the input is the index and the task index table. The output is the search result obtained through similarity ranking. For example, task similarity may be determined from the following perspectives: a task sample, where task similarity is determined based on distribution similarity between two sample sets; a task attribute, where task similarity is determined based on similarity between two task attribute rules; a task transfer relation, where task similarity is determined based on transferability between two tasks; and a task group, where task similarity is determined based on tasks included in a same task group. In an example, the multi-task index query and sorting module 313 may include the following sub-modules: a comparison module 3132, a knowledge similarity measurement module 3133, and a related knowledge filtering module 3134. The following describes functions of the sub-modules in detail.

The comparison module 3132 performs comparison and adaptation based on a to-be-queried knowledge type, and selects an appropriate knowledge similarity measurement method. Specifically, the input is a to-be-queried knowledge type, and the output is a knowledge similarity measurement method. For example, there may be a plurality of to-be-queried knowledge types, such as sample, model, task, task relation, and the like; and knowledge similarity measurement methods for various types of knowledge are different. The comparison module 3132 performs comparison and adaptation based on the to-be-queried knowledge type and selects an appropriate knowledge similarity measurement method. For example, if the to-be-queried knowledge is a "related task", the adapted similarity measurement method is that "decision tree is used to for comparison between task attributes".

The knowledge similarity measurement module 3133 measures knowledge similarity using the knowledge similarity measurement method selected by the comparison and adaptation module. Specifically, the input is the knowledge similarity measurement method, and the output is a list of knowledge similarity. In an example, the knowledge similarity measurement module 3133 reads existing knowledge from the knowledge base, traverses the existing knowledge in the knowledge base, and measures similarity between the existing knowledge and new knowledge using the knowledge similarity measurement method selected by the comparison module 3132. All results are sorted in descending order by similarity to generate a list of knowledge similarity.

The related knowledge filtering module 3134 filters out one or more most related knowledge from the list of knowledge similarity for output. Specifically, the input is the list of knowledge similarity, and the output is a list of related knowledge. In an example, the related knowledge filtering module 3134 filters out and outputs one or more related knowledge based on the list of knowledge similarity, a knowledge similarity threshold, and the user query command obtained by the knowledge similarity measurement module 3133. For example, if the list of knowledge similarity is {Task 1 distance: 0.3, Task 2 distance: 0.35, Task 3 distance: 0.6}, a distance similarity threshold is 0.4, and the user wants to query all related tasks, the related knowledge filtering module 3134 outputs a list of related knowledge [Task 1, Task 2].

2. The knowledge base incremental maintenance module 320 may include the following sub-modules: the knowledge asynchronous integration module 321, the knowledge policy determining module 322, and the knowledge and index update module 323.

The knowledge asynchronous integration module 321 performs asynchronous integration based on the historical to-be-filled knowledge in the candidate knowledge cache 330 and the filled knowledge obtained through labeling and model filling, and obtains complete candidate update knowledge. Specifically, the input is the historical to-be-filled knowledge and the filled knowledge. The output is the candidate update knowledge. For example, some samples may suffer from labeling missing because the runtime data is sometimes incomplete. Therefore, instead of being directly updated into the knowledge base as complete knowledge, the knowledge needs to be first put into the candidate knowledge cache 330 to wait for arrival of real labeling, and then is integrated into a labeled sample by the knowledge asynchronous integration module 321 to serve as the candidate update knowledge.

The knowledge policy determining module 322 determines, based on the candidate update knowledge, a policy required for incrementally updating related task knowledge in the knowledge base, to improve coverage and precision of the knowledge base. In addition to the conventional sample and model, the related knowledge also includes the task attribute, the inter-task relation, and the task group. Specifically, the input is the candidate update knowledge, and the output is the update policy. In an example, the knowledge policy determining module 322 needs to determine, based on the candidate update knowledge, the following information to be updated into the knowledge base: the task attribute, the sample, the model, the inter-task relation, and the task group.

For example, the knowledge policy determining module 322 may determine different update policies based on the candidate update knowledge; determine a type of the candidate update knowledge based on the task attribute, the task model, and the like; and determine, using task division, task transfer relation discovery, task group mining, and other methods, a manner of updating the sample, the model, the task, the inter-task relation, and the task group of the candidate update knowledge into the knowledge base. A known task is a task already stored in the knowledge base. The candidate update knowledge is knowledge to be updated into the knowledge base.

It should be understood that the task division method is to divide different samples, which are given, into different tasks, and output a task attribute and an inter-task subordinate relation. Task division may be performed in the following manners, including but not limited to: A user manually specifies a task attribute item and inputs the task attribute item into the system during running; an expert manually specifies a task attribute item and incorporates it into the system; or an expert manually specifies task attributes of some task samples as labels; and a task classifier is trained, where the classifier inputs samples and outputs task attributes of the samples. The task transfer relation discovery method is to measure transferability between tasks based on features such as samples and using a similarity method or the like, and output a task transfer relation. The task group mining method is to group similar tasks into a same group based on a task transfer relation using a clustering method and the like, and output a task group, where a same task may be grouped to different groups.

The candidate update knowledge may be determined from one or a combination of the following dimensions. 1. Distinguish a difference between task attributes (a new attribute and an old attribute), to be specific, determine whether a target task exists in the knowledge base. A basic idea of this unknownness is to determine whether the target task (attribute) is similar to a known task attribute using similarity measurement. 2. Distinguish a difference between task models (difficult tasks and easy tasks), to be specific, determine whether a target task can be accurately inferred by the knowledge base model. The basic idea of this unknownness is to determine, based on model confidence, a model transferability rate, or other model quality metrics, whether a target task model is similar to a known task model. For example, a higher confidence level of a model indicates a smaller inference error of a predictive model for a test sample. For another example, a higher transferability rate of a model indicates a higher probability of transferring a predictive model to a target task. Implementation of the model transferability rate is similarity between task samples. For another example, other model quality metrics may include a quantity of samples for model training (statistically, a larger quantity of samples indicates a higher reliability), stability of the model in diversified dataset tests (for example, the model shows stability after being tested by a plurality of different datasets), and the like.

More specifically, for the foregoing three measurement methods, based on levels of training sets, the confidence metric or the like may be further divided into three levels for measurement, for example, a sample level, a single-task level, and a multi-task level. For example, the confidence may be further divided into sample-level model confidence, single-task-level model confidence, multi-task-level model confidence, and the like. This division may be similarly applied to other model quality metrics, for example, 1. sample-level model, in which for a given target task, a training set of the sample-level model is from a subset of a task dataset; 2. single-task-level model, in which for a given target task, a training set of the single-task-level model is a complete set of the task dataset; and 3. multi-task-level model, in which for a given target task, a training set of the multi-task-level model is from a plurality of task datasets.

For example, the knowledge policy determining module 322 may include the following sub-modules: an adaptation module 3221, a knowledge difference and similarity comparison module 3222, and an update decision module 3223. The following describes functions of the sub-modules in detail.

The adaptation module 3221 selects an adapted comparison method based on the type of the candidate update knowledge. Specifically, the input is the candidate update knowledge, and the output is the comparison method. For example, the candidate update knowledge may have a plurality of forms including a sample, a model, a task attribute, an inter-task relation, and the like, and may have a plurality of formats including a numeric type, a category type, a tensor type, a rule type, and the like. The adaptation module 3221 selects different comparison methods based on different type combinations of the candidate update knowledge.

The knowledge difference and similarity comparison module 3222 makes comparison for the candidate update knowledge based on the comparison method selected by the adaptation module 3221. Specifically, the input is the comparison method, and the output is a comparison result. In an example, the knowledge difference and similarity comparison module 3222 determines differences and similarities between knowledge newly obtained during running and existing knowledge. The comparison about the differences and similarities of knowledge may be made from these dimensions: sample distribution, model accuracy, task attribute, and the like, so that a result including different dimensions is obtained. For example, the comparison result may be as follows: "sample distribution: same, model accuracy: similar, task attribute: different".

The update decision module 3223 outputs a corresponding update policy based on the comparison result of the knowledge difference and similarity comparison module 3222. Specifically, the input is the comparison result, and the output is the update policy. In an example, the update decision module 3223 outputs the corresponding update policy based on the result of comparing the new knowledge with the existing knowledge by the knowledge difference and similarity comparison module 3222. For example, if the comparison result of the knowledge difference and similarity comparison module 3222 is "task application scope: same, model precision: different", the update decision module 3223 outputs the corresponding update policy, for example, "knowledge remodeling".

It should be understood that, in addition to support of conventional update for the sample update method and model update method, the task attribute, task relation, and task group knowledge update method further supports an incremental update feature. To be specific, when an unknown task arrives, the knowledge base does not need to learn all the known and unknown knowledge from scratch, but only needs to update the part of knowledge affected by the unknown knowledge. As shown in Table 7, the incremental update method includes but is not limited to one or more of the following: 1. knowledge inheritance, in which the task attribute, the model, the sample, the inter-task relation and the task group (optional) are inherited; 2. knowledge accumulation, in which the task attribute, the model, the sample, the inter-task relation, and the task group (optional) are updated; 3. knowledge merging, in which the task attribute is updated; and the inter-task relation, the task group (optional), the task sample and model are inherited; and 4. knowledge remodeling, in which the task model and sample, the inter-task relation and the task group (optional) are updated.

**Table 7 Incremental update method**

| | Task attribute (task application scope) | Inter-task relation, task group; model and sample (task model matching) |
|---|---|---|
| Knowledge inheritance | Inherit | Inherit |
| Knowledge accumulation | Update | Update |
| Knowledge merging | Update | Inherit |
| Knowledge remodeling | Inherit | Update |

It should be further understood that, in addition to the conventional sample and model, a selection policy for different knowledge update methods may further combine new task knowledge such as the target task attribute, the inter-task relation, and the task group (optional). For example, a user manually specifies the selection policy during running; an expert manually specifies and incorporates the selection policy; a classifier is trained, where the classifier may output the selection policy based on a target task attribute (which determines an application scope of a model), the inter-task relation, and the task group (which determine a model matching degree). The application scope of the model is determined based on the target task attribute, and the model matching degree is determined based on the inter-task relation and the task group (as shown in Table 8). There may be other methods that combine the new task knowledge such as the target task attribute, the inter-task relation, and the task group (optional).

**Table 8 Model matching degree**

| | Model match | Model mismatch |
|---|---|---|
| Scope match | Known task: | To-be-updated known model/ new task: |
| | knowledge inheritance | knowledge remodeling/knowledge accumulation (depending on precision) |
| Scope mismatch | To-be-expanded: | New task: |
| | knowledge merging | knowledge accumulation |

The knowledge and index update module 323 updates an intra-task knowledge and index, a task knowledge and index, and an inter-task knowledge and index based on the update policy obtained by the knowledge policy determining module. Specifically, the input is the update policy. The output the is intra-task knowledge, task knowledge, and inter-task knowledge. In an example, the knowledge and index update module 323 may include the following sub-modules: an intra-task knowledge and index update module 3231, a task knowledge and index update module 3232, and an inter-task knowledge and index update module 3233. The following describes functions of the sub-modules in detail.

The intra-task knowledge and index update module 3231 updates the intra-task knowledge and index based on the update policy obtained by the knowledge policy determining module. Specifically, the input is the update policy, and the output is the intra-task knowledge. In an example, the intra-task knowledge and index update module 3231 updates the intra-task knowledge and index based on the update policy obtained by the knowledge policy determining module. For example, if some sample sets in the runtime data are determined as the existing task in the knowledge base, the intra-task knowledge and index update module 3231 updates the sample sets to the knowledge base as the intra-task knowledge based on the update policy.

The task knowledge and index update module 3232 updates the task knowledge and index based on the update policy obtained by the knowledge policy determining module. Specifically, the input is the update policy, and the output is the task knowledge. In an example, the task knowledge and index update module 3232 updates the task knowledge and index based on the update policy obtained by the knowledge policy determining module. For example, if some sample sets in the runtime data are determined as the existing task in the knowledge base, and the task attribute, the task constraint, and the like of the existing task are changed after new samples are added, the task knowledge and index update module 3232 updates the new task attribute, the task constraint, and the like to the knowledge base as the task knowledge based on the update policy.

The inter-task knowledge and index update module 3233 updates the inter-task knowledge and index based on the update policy obtained by the knowledge policy determining module. Specifically, the input is the update policy, and the output the inter-task knowledge. The inter-task knowledge and index update module 3233 updates the inter-task knowledge and index based on the update policy obtained by the knowledge policy determining module. For example, if some sample sets in the runtime data are determined as the existing task in the knowledge base, and the task transfer relation, the task group, and the like of the existing task are also changed after the new samples is added, the inter-task knowledge and index update module 3233 updates the new task transfer relation, the new task group, and the like to the knowledge base as the inter-task knowledge based on the update policy.

It should be understood that, as shown in FIG. 5A, after the multi-task knowledge in the edge knowledge base 220 is updated, multi-task knowledge synchronization between the edge knowledge base 220 and the cloud knowledge base 230 may be further implemented. For example, the multi-task knowledge may be bidirectionally transmitted through the edge-cloud knowledge synchronization module between the edge knowledge base 220 and the cloud knowledge base 230, to ensure knowledge synchronization.

The following describes a knowledge base running phase in detail with reference to a specific example. It should be understood that the following example is merely intended to help a person skilled in the art understand embodiments of this application, but is not intended to limit embodiments of this application to specific values or specific scenarios in the example. A person skilled in the art may make various equivalent modifications or variations based on the following example. The modifications and changes also fall within the scope of embodiments of this application.

A coal blending quality prediction system is a complex system, and a factory expects to improve coal blending quality through machine learning. Therefore, a knowledge base is required, which includes different machine learning models for coal blending quality prediction performed using different coal type ratio parameters. The input of the different machine learning models are different coal type ratio parameters, and the output are different predicted coal blending quality values.

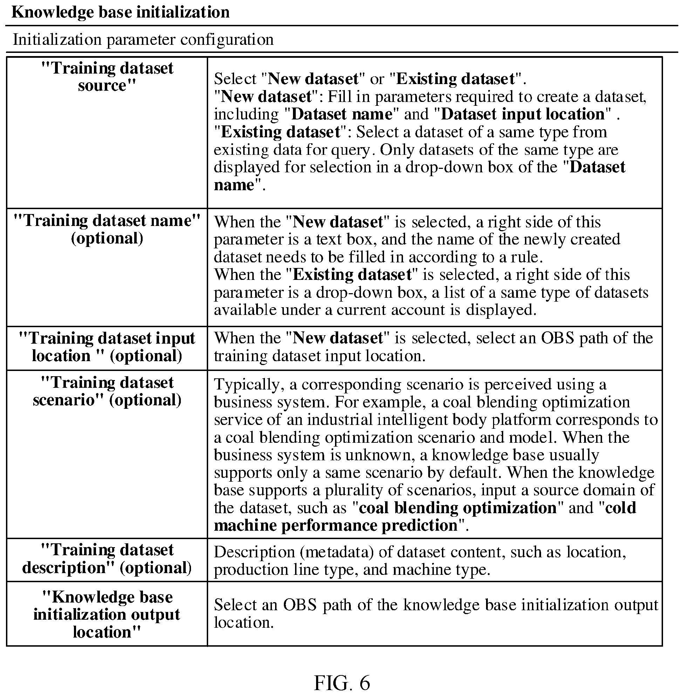

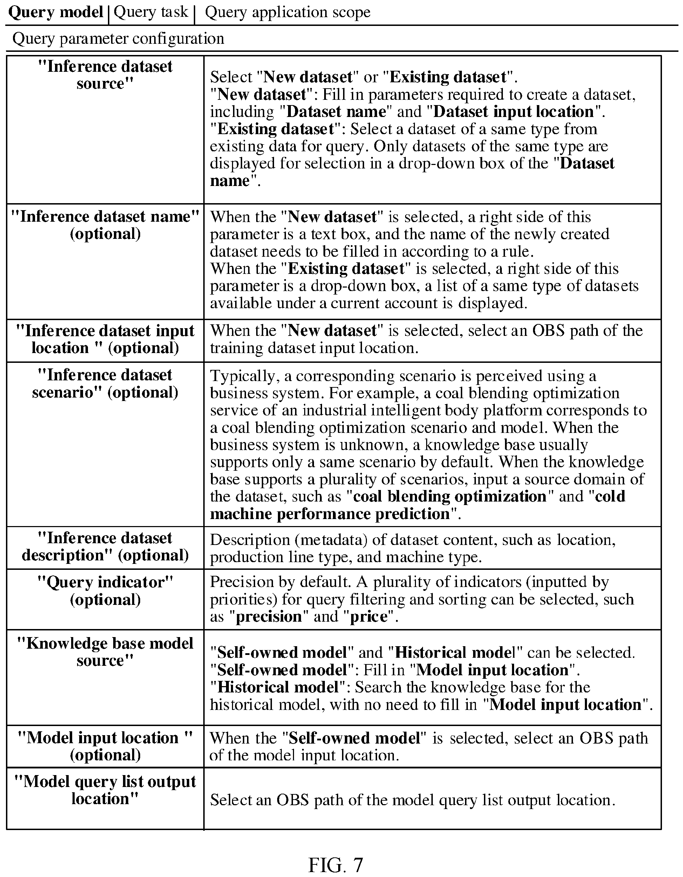

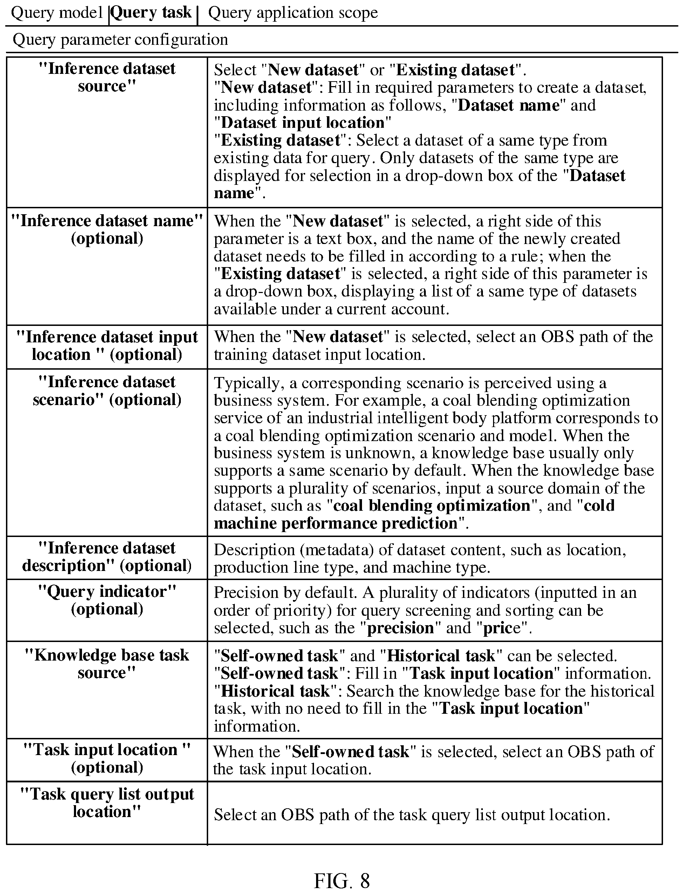

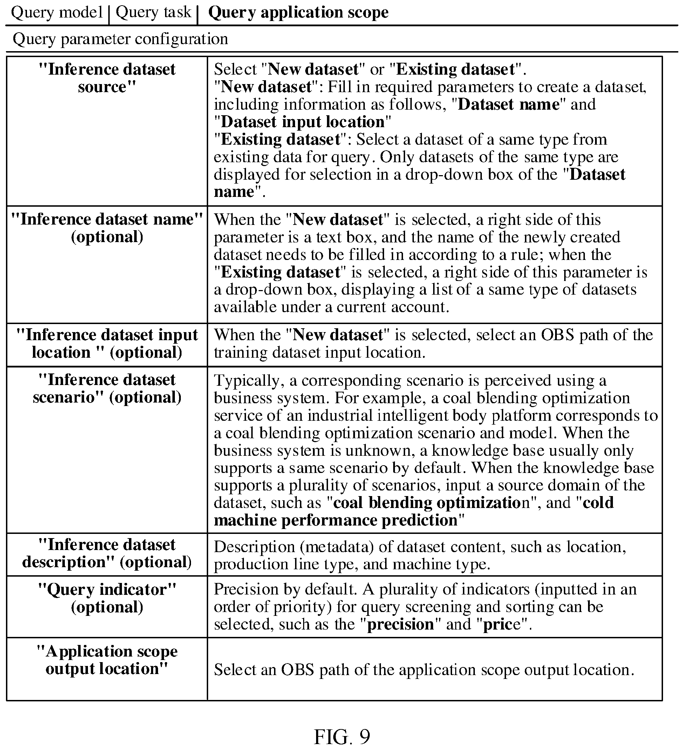

Before use, a user may make customized configuration based on specified mandatory and optional parameters. For example, refer to the customized configuration shown in FIG. 6 to FIG. 9. The following takes the coal blending quality prediction system as an example to describe functions of modules in an initialization phase and a running phase of the knowledge base in detail.

### 1. Initialization phase of the knowledge base

The intra-task knowledge and intra-task knowledge index table initialization module 2111 in the multi-task knowledge initialization module 211 receives coal blending multi-task knowledge and a multi-task knowledge extractor, extracts intra-task knowledge and constructs an index table, to obtain results shown in Table 9 to Table 12.

**Table 9 Intra-task sample knowledge**

| Intra-task sample address | Sample |
|---|---|
| root/T1/S1 | Sample S1-1 |
| root/T1/S1 | Sample S1-2 |
| root/T2/S2 | Sample S2-1 |

**Table 10 Intra-task model knowledge**

| Intra-task model address | Model |
|---|---|
| root/T1/M1 | Model T1-M1 |
| root/T 1/M2 | Model T1-M2 |
| root/T21M1 | Model T2-M1 |

**Table 11 Other intra-task knowledge**

| Other intra-task knowledge address | Other intra-task knowledge |
|---|---|
| root/T1/O1 | Model precision = 0.98... |
| root/T1/O2 | Model precision = 0.95... |
| root/T2/O1 | Model precision = 0.96... |

**Table 12 Intra-task knowledge index table**

| Task index | Task address | Intra-task sample address | Intra-task model address | Other intra-task knowledge address |
|---|---|---|---|---|
| 01 | root/T1 | root/T1/S1 | root/T1/M1 | root/T1/O1 |
| | | root/T1/S1 | root/T1/M2 | root/T1/O2 |
| 02 | root/T2 | root/T2/S2 | root/T2/M1 | root/T2/O1 |

After extracting of the intra-task knowledge, the intra-task knowledge and intra-task knowledge index table initialization module 2111 serializes the knowledge as intra-task knowledge using a pickle package, saves the knowledge in the knowledge base, and inputs the knowledge to the task knowledge and task knowledge index table initialization module 2112.

The task knowledge and task knowledge index table initialization module 2112 receives the multi-task knowledge, the multi-task knowledge extractor, and the extracted intra-task knowledge, extracts task knowledge, and constructs an index table to obtain a result shown in Table 13.

**Table 13 Task knowledge and index table**

| Task index | Task address | Task attribute | Other attributes |
|---|---|---|---|
| 01 | root/T1 | Decision tree CLF1 | Sample lower limit = 5... |
| 02 | root/T2 | Decision tree CLF2 | Sample lower limit = 5... |
| 03 | root/T3 | Decision tree CLF3 | Sample lower limit = 5... |

After extracting the task knowledge, the task knowledge and task knowledge index table initialization module 2112 serializes the knowledge as task knowledge using a pickle package to, and saves the knowledge in the knowledge base, and inputs the knowledge to the inter-task knowledge and inter-task knowledge index table initialization module 2113.

The inter-task knowledge and inter-task knowledge index table initialization module 2113 receives the multi-task knowledge, the multi-task knowledge extractor, and the extracted task knowledge, extracts inter-task knowledge, and constructs an index table to obtain results shown in Tables 4 and 5. It should be understood that a multi-task relation in a same scenario is generally managed by a single task correlation table for unified management, where the task correlation index table is shown in Table 14.

**Table 14 Task correlation index table**

| Task correlation table index | Task address |
|---|---|
| TR01 | root/TR1 |
| TR02 | root/TR2 |
| TR03 | root/TR3 |

After extracting of the inter-task knowledge, the inter-task knowledge and inter-task knowledge index table initialization module 2113 serializes the knowledge as inter-task knowledge using a pickle package, and saves the knowledge in the knowledge base. The multi-task knowledge initialization module 211 exits, and initialization of the multi-task knowledge is completed.

After the initialization of the multi-task knowledge is completed, the edge-cloud knowledge synchronization module 212 reads the knowledge from the knowledge base (the edge knowledge base 220) and synchronizes the knowledge to the cloud knowledge base 230.

### 2. Running phase of the knowledge base

After the query command parsing module 3111 receives the target knowledge type query command shown in Table 6, the query command parsing module 3111 parses that user A needs to search for a task related to the No. 03 dataset in the knowledge base, where the receiving address is 192.162.10.12. The query command parsing module 3111 may transfer the information as a query knowledge item to the knowledge feedback module 3112.

The query knowledge item received by the knowledge feedback module 3112 is shown in Table 15. The knowledge feedback module 3112 may read the No. 03 dataset based on the query knowledge type being task knowledge, and inputs the No. 03 dataset to the intra-task knowledge and index extraction module 3121. The intra-task knowledge and index extraction module 3121 obtains corresponding task knowledge, and outputs the task knowledge as the target knowledge.

**Table 15 Query knowledge item**

| Recipient address | Query knowledge type | Runtime data (set) ID |
|---|---|---|
| 192.162.10.12 | Task knowledge | 03 |

The comparison module 3132 receives a task T4 and a task attribute decision tree CLF4 of the task T4, outputs a knowledge similarity comparison method shown in Table 16 based on a specified adaptation rule, and inputs the knowledge similarity comparison method to the knowledge similarity measurement module 3133.

**Table 16 Knowledge similarity comparison method**

| Query content | Task attribute | Knowledge similarity comparison method |
|---|---|---|
| Related task | Decision tree CLF4 | For example, use the decision tree to compare task similarity |

The knowledge similarity comparison method actually includes a plurality of new methods that are not described, such as a training sample comparison method, a task model comparison method, and an application scope comparison method. A principle of the application scope comparison method is to determine task models are similar in the case that application scopes of the task models are similar. The application scope comparison method, which is the most versatile, accurate, and difficult one among the three methods, can be used in different basic models. An implementation of the application scope comparison method is the decision tree method.

It should be understood that a decision tree may be constructed for each task model, to determine whether the task model is available. For example, an entire dataset is divided into several tasks, and each task has its own linear regression model. For a task, the entire dataset is predicted using the linear regression model corresponding to the task and compared with an actual label. If the prediction is correct, it is considered that "the model is accepted by the sample". In this case, a value 1 is assigned to the model; otherwise, a value 0 is assigned to the model. Then, the entire training set and the values 0 and 1 are spliced as input of the decision tree. The decision tree divides samples based on division rules and parameter settings of nodes of the decision trees, to ensure that purity of each node is as high as possible (for example, measured by entropy, gini, or the like).

A principle of the decision tree similarity comparison method is as follows. When decision trees of different tasks are similar, it indicates that application scopes of the task models are similar, in other words, the tasks are similar. For example, each decision tree may be extracted into a plurality of rule sets, and each rule is a two-tuple: rule = (condition, conclusion), for example, (condition: x[0]<= 28.818 and x[2]<= 64.65, conclusion: gini = 0...). All conditions (aforementioned) of the two decision trees are extracted and aligned, to ensure that conclusions of the two decision trees are compared under same conditions, and then conclusions are compared under different conditions, to obtain final similarity.

The similarity comparison method of the knowledge similarity measurement module 3133 is "comparing task similarity using decision tree". The knowledge similarity measurement module 3133 reads existing knowledge from the knowledge base, obtains a list of knowledge similarity shown in Table 17 using a similarity measuring algorithm, and inputs the list of knowledge similarity to the related knowledge filtering module 3134.

**Table 17 List of knowledge similarity**

| Task index | Task name | Distance |
|---|---|---|
| 05 | Task T5 | 0.59 |
| 06 | Task T6 | 0.42 |
| 07 | Task T7 | 0.43 |
| 08 | Task T8 | 0.51 |
| 09 | Task T9 | 0.31 |
| 10 | Task T 10 | 0.36 |

After receiving the list of knowledge similarity shown in Table 17, the related knowledge filtering module 3134 filters out, based on a specified distance threshold 0.35, a list of similar tasks shown in Table 18, and returns the list of similar tasks as the target knowledge.

**Table 18 List of filtered similar tasks**

| Task index | Task name | Distance |
|---|---|---|
| 09 | Task T9 | 0.31 |

After a user command is completed, the runtime data and the related knowledge of the runtime data are input the candidate knowledge cache 330 as the candidate to-be-filled knowledge to wait for a label that has not arrived. When a CSR label arrives, the knowledge asynchronous integration module 321 reads, from the candidate knowledge cache 330, the historical to-be-filled knowledge and the external filled knowledge, integrates the knowledge into complete candidate update knowledge shown in Table 19, and inputs the updated knowledge into the knowledge policy determining module 322.

**Table 19 Candidate update knowledge**

| Data ID | Gray_x | Volatility score_x | Sulfur_x | G value_x | CSR (filling) |
|---|---|---|---|---|---|
| 01 | 9.77 | 27.77 | 0.98 | 69.75 | 64.2 |
| 02 | 10.04 | 29.15 | 1.04 | 71.75 | 65.1 |
| 03 | 10.17 | 28.92 | 1.09 | 71 | 64.8 |

The adaptation module 3221 in the knowledge policy determining module 322 receives the candidate update knowledge and the related knowledge of the candidate update knowledge, outputs, based on the specified adaptation rule, a knowledge difference and similarity comparison method shown in Table 20, and inputs the knowledge difference and similarity comparison method to the knowledge difference and similarity comparison module 3222.

**Table 20 Knowledge difference and similarity comparison method**

| Candidate update knowledge type | Task attribute | Knowledge difference and similarity comparison method |
|---|---|---|
| Task | Decision tree CLF4 | Compare the task attributes and models |

After receiving the knowledge difference and similarity comparison method shown in Table 20, the knowledge difference and similarity comparison module 3222 compares the candidate update knowledge and related knowledge thereof, outputs a knowledge difference and similarity comparison result shown in Table 21, and inputs the knowledge difference and similarity comparison result to the update decision module 3223.

**Table 21 Knowledge difference and similarity comparison result**

| Task index | Task attribute | Task model |
|---|---|---|
| 09 | Similar | Different |

After receiving the knowledge difference and similarity comparison result shown in Table 21, the update decision module 3223 outputs update methods shown in Tables 22 and 23 based on a specified update rule.

**Table 22 Knowledge update method**

| | Task attribute (task application scope) | Inter-task relation, task group; model and sample (task model matching) |
|---|---|---|
| Knowledge inheritance | Inherit | Inherit |
| Knowledge accumulation | Update | Update |
| Knowledge merging | Update | Inherit |
| Knowledge remodeling | Inherit | Update |

**Table 23 Knowledge update method**

| | Model match | Model mismatch |
|---|---|---|
| Scope match | Known task: knowledge inheritance | To-be-updated known model/ new task: knowledge remodeling/knowledge accumulation (selected based on precision) |
| Scope mismatch | To-be-expanded: knowledge merging | New task: knowledge accumulation |

The task knowledge and index update module 3232 determines, based on the update policy, to re-train the new task and the original No. 9 task, inherits the task attributes of the new task and the original No. 9 task, combines samples, and generates a new model, a task index, and other knowledge; and replaces the original No. 9 task in the knowledge base with the new task update, to update the task knowledge and index.

It should be understood that sequence numbers of the foregoing processes do not mean execution sequences in various embodiments of this application. The execution sequences of the processes should be determined depending on functions and internal logic of the processes, and should not be construed as any limitation on the implementation processes of the embodiments of this application.

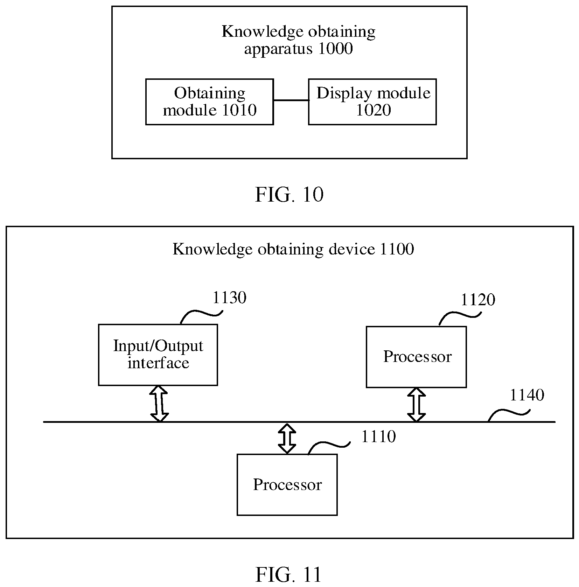

The foregoing describes in detail the method according to embodiments of this application with reference to FIG. 1 to FIG. 9. The following describes in detail embodiments of an apparatus of this application with reference to FIG. 10 to FIG. 11. It should be understood that the descriptions of the method embodiments correspond to the descriptions of the apparatus embodiments. Therefore, for parts not described in detail, refer to the foregoing method embodiments.

FIG. 10 is a schematic block diagram of a knowledge obtaining apparatus 1000 according to an embodiment of this application. The knowledge obtaining apparatus may be implemented as a whole or a part of the apparatus using software, hardware, or a combination thereof. The apparatus provided in this embodiment of this application may implement the method procedure shown in FIG. 1 in an embodiment of this application. The knowledge obtaining apparatus 1000 includes an obtaining module 1010 and a display module 1020.

The obtaining module 1010 is configured to obtain one or more pieces of first knowledge from a knowledge base based on a parameter, where the parameter includes any one or any combination of the following: knowledge in a machine learning task, an attribute of the machine learning task, and knowledge between a plurality of machine learning tasks; and

The display module 1020 is configured to provide the one or more pieces of first knowledge for a user.

Optionally, the obtaining module 1010 is further configured to: obtain the parameter inputted by the user, or obtain the parameter from another system.

Optionally, the knowledge in the machine learning task includes a sample set and a model of the machine learning task. The model is obtained through training based on the sample set; or the attribute of the machine learning task includes a constraint and an application scope of the machine learning task; or the knowledge between the plurality of machine learning tasks includes an association relationship between the plurality of machine learning tasks.

Optionally, the obtaining module 1010 is further configured to obtain second knowledge related to the first knowledge from the knowledge base; and the display module is further configured to provide the second knowledge for the user.

Optionally, the display module 1020 is further configured to provide the user with configuration information of the first knowledge.

Optionally, the obtaining module 1010 is further configured to obtain target knowledge selected by the user, where the target knowledge is the first knowledge and/or the second knowledge.

Optionally, the target knowledge is used in any one of the following scenarios:
object recognition in intelligent driving;
facial recognition in the intelligent driving;
a developer platform;
an artificial intelligence marketing platform;
an internet of things marketing platform; and
a marketing platform for solutions.

Optionally, the apparatus 1000 further includes a synchronization module 1030, configured to: synchronize, for an edge device, the knowledge in the knowledge base to a cloud device; or synchronize, for a cloud device, the knowledge in the knowledge base to an edge device.

It should be noted that, when the knowledge obtaining apparatus provided in the foregoing embodiment performs image prediction, division into the foregoing functional modules is merely used as an example for description. In actual application, the foregoing functions may be allocated to different functional modules for implementation depending on actual requirements. In other words, an internal structure of the apparatus is divided into different functional modules, to implement all or some of the functions described above. In addition, the knowledge obtaining apparatus provided in the foregoing embodiment and embodiments of the knowledge obtaining method belong to a same concept. For a detailed implementation process, refer to the foregoing method embodiment as above, and details are not described herein again.

FIG. 11 is a schematic block diagram of a knowledge obtaining device 1100 according to an embodiment of this application. The knowledge obtaining device 1100 includes a disposed knowledge obtaining apparatus 1000, which can execute steps of the method shown in FIG. 1, and is not described in detail herein to avoid repetition. The knowledge obtaining device 1100 includes a memory 1110, a processor 1120, and an input/output interface 1130.

The processor 1120 may establish a communication connection to the input/output interface 1130. The memory 1110 may be configured to store program code and data of the knowledge obtaining device 1100. Therefore, the memory 1110 may be a storage unit inside the processor 1120, or may be an external storage unit independent of the processor 1120, or may be a component including the storage unit inside the processor 1120 and the external storage unit independent of the processor 1120.

Optionally, the knowledge obtaining device 1100 may further include a bus 1140. The memory 1110 and the input/output interface 1130 may be connected to the processor 1120 through the bus 1140. The bus 1140 may be a peripheral component interconnect (peripheral component interconnect, PCI) bus, an extended industry standard architecture (extended industry standard architecture, EISA) bus, or the like. The bus 1140 may include an address bus, a data bus, a control bus, or the like. For ease of representation, only one bold line is used to represent the bus in FIG. 11, but this does not mean that there is only one bus or only one type of bus.

For example, the processor 1120 may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. The processing module 1001 may be a combination of processors implementing a computing function, for example, a combination of one or more microprocessors, or a combination of the DSP and a microprocessor.

The input/output interface 1130 may be a circuit including an antenna, a transmitter chain, and a receiver chain, which may be independent circuits or may be a same circuit.

When the program code and the data of the knowledge obtaining device 1100 that are stored in the memory 1110 are executed, in a possible implementation, the processor 1120 is configured to perform the following operations:
obtaining one or more pieces of first knowledge from a knowledge base based on a parameter, where the parameter includes any one or any combination of the following: knowledge in a machine learning task, an attribute of the machine learning task, and knowledge between a plurality of machine learning tasks; and providing the one or more pieces of first knowledge to a user.

Optionally, the processor 1120 is further configured to: obtain the parameter inputted by the user, or obtain the parameter from another system.

Optionally, the knowledge in the machine learning task includes a sample set and a model of the machine learning task. The model is obtained through training based on the sample set; or the attribute of the machine learning task includes a constraint and an application scope of the machine learning task; or the knowledge between the plurality of machine learning tasks includes an association relationship between the plurality of machine learning tasks.

Optionally, the processor 1120 is further configured to: obtain second knowledge related to the first knowledge from the knowledge base, and provide the second knowledge for the user.

Optionally, the processor 1120 is further configured to: determine a knowledge similarity comparison method based on the first knowledge; obtain a list of similar knowledge from the task knowledge base based on the knowledge similarity comparison method; and determine the second knowledge from the list of similar knowledge based on a similarity threshold.

Optionally, the processor 1120 is further configured to provide the user with configuration information of the first knowledge.

Optionally, the processor 1120 is further configured to obtain target knowledge selected by the user, where the target knowledge is the first knowledge and/or the second knowledge.

Optionally, the target knowledge is used in any one of the following scenarios:
object recognition in intelligent driving;
facial recognition in the intelligent driving;
a developer platform;
an artificial intelligence marketing platform;
an internet of things marketing platform; and
a marketing platform for solutions.

Optionally, the processor 1120 is further configured to update the task knowledge base based on the first knowledge and the second knowledge.

Optionally, the processor 1120 is specifically configured to: determine a knowledge difference and similarity comparison method based on the first knowledge and the second knowledge; obtain a knowledge difference and similarity comparison result based on the knowledge difference and similarity comparison method, where the knowledge difference and similarity comparison result is a comparison result of a difference and similarity between the first knowledge and the second knowledge; and update, based on the knowledge difference and similarity comparison result and an update rule, any one or any combination of the following intra-task knowledge in the knowledge base: the knowledge in the machine learning task, the attribute of the machine learning task, and the knowledge between a plurality of machine learning tasks.

Optionally, the processor 1120 is further configured to: synchronize, for an edge device, the knowledge in the knowledge base to a cloud device; or synchronize, for a cloud device, the knowledge in the knowledge base to an edge device.

The modules in the foregoing examples can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

An embodiment of this application further provides a chip. The chip obtains instructions and executes the instructions to implement the foregoing knowledge obtaining method, or the instructions are used to implement the knowledge obtaining device.

Optionally, in an implementation, the chip includes a processor and a data interface. The processor reads, through the data interface, instructions stored in a memory, to perform the knowledge obtaining method.

Optionally, in an implementation, the chip may further include a memory. The memory stores instructions. The processor is configured to execute the instructions stored in the memory. When the instructions are executed, the processor is configured to perform the knowledge obtaining method.

An embodiment of this application further provides a computer-readable storage medium. The computer readable storage medium stores instructions, and the instructions are used for the knowledge obtaining method in the foregoing method embodiment, or the instructions are used to implement the foregoing knowledge obtaining device.

An embodiment of this application further provides a computer program product including instructions. The instructions are used to implement the knowledge obtaining method in the foregoing method embodiment, or the instructions are used to implement the foregoing knowledge obtaining device.

In an implementation example, the processor may be a central processing unit (central processing unit, CPU), or the processor may be another general-purpose processor, a digital signal processor (digital signal processor, DSP), an application-specific integrated circuit (application specific integrated circuit, ASIC), a programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

In an implementation example, the memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The term "and/or" in this specification describes only an association relationship for describing associated objects and represents that three relationships may exist. For example, A and/or B may represent the following three cases: Only A exists, both A and B exist, and only B exists, where A and B each may be in a singular or plural form. In addition, the character "/" in this specification usually indicates an "or" relationship between the associated objects, but may also indicate an "and/or" relationship. For details, refer to the context for understanding.

In this application, "a plurality of" refers to two or more. At least one of the following items (pieces) or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be singular or plural.

It may be clearly understood by a person skilled in the art that, for convenient and brief description, for a detailed working process of the foregoing system, apparatus, and units, refer to a corresponding process in the foregoing method embodiments, and details are not described herein again.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A knowledge obtaining method, comprising:
obtaining one or more pieces of first knowledge from a knowledge base based on a parameter, where the parameter comprises any one or any combination of the following: knowledge in a machine learning task, an attribute of the machine learning task, and knowledge between a plurality of machine learning tasks; and
providing the one or more pieces of first knowledge for a user.

2. The method according to claim 1, wherein the method further comprises:
obtaining the parameter inputted by the user; or
obtaining the parameter from another system.

3. The method according to claim 1 or 2, wherein
the knowledge in the machine learning task comprises a sample set and a model of the machine learning task, and the model is obtained through training based on the sample set; or
the attribute of the machine learning task comprises a constraint and an application scope of the machine learning task; or
the knowledge between the plurality of machine learning tasks comprises an association relationship between the plurality of machine learning tasks.

4. The method according to any one of claims 1 to 3, wherein the method further comprises:
obtaining second knowledge related to the first knowledge from the knowledge base; and
providing the second knowledge for the user.

5. The method according to claim 1, wherein the method further comprises:
providing the user with configuration information of the first knowledge.

6. The method according to any one of claims 1 to 5, wherein the method further comprises:
obtaining target knowledge selected by the user, wherein the target knowledge is the first knowledge and/or the second knowledge.

7. The method according to claim 6, wherein the target knowledge is used in any one of the following scenarios:
object recognition in intelligent driving;
facial recognition in the intelligent driving;
a developer platform;
an artificial intelligence marketing platform;
an internet of things marketing platform; and
a marketing platform for solutions.

8. The method according to any one of claims 1 to 7, wherein the method further comprises:
synchronizing, by an edge device, the knowledge in the knowledge base to a cloud device; or
synchronizing, by a cloud device, the knowledge in the knowledge base to an edge device.

9. A knowledge obtaining apparatus, comprising:
an obtaining module, configured to obtain one or more pieces of first knowledge from a knowledge base based on a parameter, wherein the parameter comprises any one or any combination of the following: knowledge in a machine learning task, an attribute of the machine learning task, and knowledge between a plurality of machine learning tasks; and
a display module, configured to provide the one or more pieces of first knowledge for a user.

10. The apparatus according to claim 9, wherein the obtaining module is further configured to:
obtain the parameter inputted by the user; or
obtain the parameter from another system.

11. The apparatus according to claim 9 or 10, wherein
the knowledge in the machine learning task comprises a sample set and a model of the machine learning task, and the model is obtained through training based on the sample set; or
the attribute of the machine learning task comprises a constraint and an application scope of the machine learning task; or
the knowledge between the plurality of machine learning tasks comprises an association relationship between the plurality of machine learning tasks.

12. The apparatus according to any one of claims 9 to 11, wherein
the obtaining module is further configured to obtain second knowledge related to the first knowledge from the knowledge base; and
the display module is further configured to provide the second knowledge for the user.

13. The apparatus according to claim 9, wherein the display module is further configured to:
provide the user with configuration information of the first knowledge.

14. The apparatus according to any one of claims 9 to 13, wherein the obtaining module is further configured to:
obtain target knowledge selected by the user, wherein the target knowledge is the first knowledge and/or the second knowledge.

15. The apparatus according to claim 14, wherein the target knowledge is used in any one of the following scenarios:
object recognition in intelligent driving;
facial recognition in the intelligent driving;
a developer platform;
an artificial intelligence marketing platform;
an internet of things marketing platform; and
a marketing platform for solutions.

16. The apparatus according to any one of claims 9 to 15, further comprising:
a synchronization module, configured to synchronize, for an edge device, the knowledge in the knowledge base to a cloud device; or synchronize, for a cloud device, the knowledge in the knowledge base to an edge device.

17. A knowledge obtaining device, comprising a processor and a memory, wherein the processor runs instructions in the memory, causing the knowledge obtaining device to implement the method according to any one of claims 1 to 8.

18. A computer-readable storage medium, comprising instructions, wherein the instructions are used to implement the method according to any one of claims 1 to 8.
